# EUROPEAN PATENT APPLICATION

(11) **EP 4 084 126 A1**
(43) Date of publication of application: **02.11.2022**
(21) Application number: 21892164.1
(22) Date of filing: 14.10.2021
(51) Int. Cl.: H01M 4/133, H01M 4/583, H01M 4/587, H01M 4/62, H01M 10/0562, H01M 10/0525

(54) **ANODE FOR ALL-SOLID-STATE BATTERY AND ALL-SOLID-STATE BATTERY INCLUDING SAME**

(30) Priority: 10.11.2020 KR 20200149184
(71) Applicant: LG Energy Solution, Ltd., Seoul 07335 (KR); Korea Advanced Institute of Science and Technology, Daejeon 34141 (KR)
(72) Inventor: YOON, Jong Keon, Daejeon 34122 (KR); HAH, Hoejin, Daejeon 34122 (KR); JUNG, Hyeri, Daejeon 34122 (KR); KIM, Hee-Tak, Daejeon 34141 (KR); LEE, Ju-Hyuk, Daejeon 34141 (KR)
(74) Representative: Hoffmann Eitle
(86) International application number: PCT/KR2021/014241
(87) International publication number: WO 2022/102994

(57) **Abstract**

The present disclosure relates to a negative electrode for an all-solid-state battery that enables the provision of an all-solid-state battery exhibiting excellent contact characteristics between the negative electrode and a solid electrolyte along with improved life characteristics, and an all-solid-state battery including the same.

## Description

### [TECHNICAL FIELD]

### Cross Citation with Related Application(s)

This application claims the benefit of Korean Patent Application No. 10-2020-0149184 filed on November 10, 2020 in the Korean Intellectual Property Office, the disclosure of which is incorporated herein by reference in its entirety.

The present disclosure relates to a negative electrode for an all-solid-state battery that enables the provision of an all-solid-state battery exhibiting excellent contact characteristics between the negative electrode and a solid electrolyte along with improved life characteristics, and an all-solid-state battery including the same.

### [BACKGROUND]

Secondary batteries have been mainly applied to small fields such as mobile devices and notebook computers, but recently their application direction has been expanded to medium and large fields, and has been mainly expanded to fields where high energy and high output are required in relation to an energy storage system (ESS) or an electric vehicle (EV). In the case of such a medium- and large-sized secondary batteries, unlike the small-sized ones, not only the operating environment such as temperature and impact is harsh, but also more batteries must be used. Therefore, it is necessary to ensure safety along with excellent performance or an appropriate price. Since most of the currently commercialized secondary batteries use a liquid electrolyte in which lithium salt is dissolved in an organic solvent, they have potential risks of fire and explosion, including leakage.

Therefore, development of an all-solid-state battery has recently been conducted, the all-solid-state battery is a battery that uses a solid electrolyte instead of a liquid electrolyte, and has an advantage that it has higher thermal stability than an existing lithium secondary battery to which a liquid electrolyte is applied. Further, since the all-solid-state battery is advantageous over the existing lithium secondary battery in terms of high energy density and output characteristics, simplification of the manufacturing process, and enlargement/ compactness of the battery, research and interest thereon have been concentrated recently.

On the other hand, in the case of the existing all-solid-state battery, a graphite negative electrode was mainly used as in the existing lithium secondary battery. However, in recent years, in order to further enhance the capacity characteristics of a battery, the use of a lithium metal negative electrode or a negative electrode using a silicon-based active material has been extensively discussed and studied. As both these lithium metal negative electrodes and silicon-based negative electrodes have high theoretical capacity, it is possible to realize high capacity and energy density.

However, when the lithium metal negative electrode is used, in the initial charge / discharge process of the battery, lithium moving from the positive electrode to the negative electrode is laminated in the form of dendrites on the surface of the negative electrode to form lithium dendrites, which has thus a drawback of deteriorating the life characteristics and stability of the battery. Further, the silicon-based negative electrode also has a drawback that a large volume change is caused during the charge / discharge process, so that the life characteristics of the battery are greatly deteriorated. Therefore, there is a continuous demand for the development of a negative electrode and/or an all-solid-state battery having improved life characteristics and the like while realizing a higher capacity and energy density.

In addition, since the all-solid-state battery contains a solid electrolyte, in order to fully exhibit the performance of such an all-solid-state battery, it is necessary to ensure sufficient contact characteristics between each electrode and the solid electrolyte and to realize high ionic conductivity. However, due to the characteristics of the solid electrolyte, it is difficult to permeate into each electrode and it is not easy to secure a sufficient contact area. An all-solid-state battery, in which sufficient contact characteristics between the electrode and the solid electrolyte, low interfacial resistance, and high ionic conductivity have been ensured, has not been properly developed yet.

Due to the problems of the prior art as described above, there is a continuous demand for the development of all-solid-state battery-related technologies that exhibit excellent contact characteristics between electrodes and solid electrolytes, as well as improved life characteristics.

### [Technical Problem]

The present disclosure provides a negative electrode for an all-solid-state battery that enables the provision of an all-solid-state battery exhibiting excellent contact characteristics between the negative electrode and a solid electrolyte along with improved life characteristics, while exhibiting a high energy density.

Further, the present disclosure provides an all-solid-state battery including the negative electrode, which exhibits high energy density, improved life characteristics, excellent contact characteristics between a negative electrode and a solid electrolyte, and low interfacial resistance.

### [Technical Solution]

According to one aspect of the present disclosure, there is provided a negative electrode for an all-solid-state battery comprising:
a crystalline carbon layer;
an amorphous carbon layer which includes a carbon defect structure formed on the crystalline carbon layer and formed of electron-deficient carbon atoms, and in which nanoscale pores are formed in the carbon defect structure; and
a solid electrolyte material formed in the pores of the amorphous carbon layer.

According to another aspect of the present disclosure, there is provided an all-solid-state battery comprising:
a positive electrode including a positive electrode current collector, and a lithium composite oxide-based positive electrode active material layer formed on the positive electrode current collector;
the above-mentioned negative electrode; and
an additional solid electrolyte layer interposed between the positive electrode and the negative electrode.

### [ADVANTAGEOUS EFFECTS]

The negative electrode of the present disclosure not only excludes or minimally includes a separate active material layer formed three-dimensionally, such as a separate lithium metal thin film, but also includes an amorphous carbon layer containing a carbon defect structure formed of electron-deficient carbon atoms by chemically treating a crystalline carbon layer, and a plurality of nanopores.

By the formation of an amorphous carbon layer containing such a carbon defect structure, it is possible to eliminate or reduce an active material layer such as a lithium metal thin film formed in the form of a three-dimensional additional thin film in a battery to which an existing lithium metal negative electrode is applied, or the like. Therefore, it is possible to fundamentally suppress the growth of lithium dendrites from such a lithium metal thin film or the like.

In addition to this, in the amorphous carbon layer, as a large number of electron-deficient carbon atoms are included in the carbon defect structure, a large number of lithium ions and/or lithium compounds containing them can be intercalated while donating electrons to these carbon atoms. Further, by using such lithium ions and the like as nuclei, lithium metal can be uniformly electrodeposited around them. Therefore, such amorphous carbon layer can induce uniform lithium electrodeposition formed two-dimensionally on the same plane, and the lithium metal thus electrodeposited can act as an active material layer having a lithium ion source. Therefore, the negative electrode of the present disclosure can realize a high energy density comparable to the case where the existing lithium metal negative electrode is applied.

In addition, since a solid electrolyte material can be filled in a large number of nanopores formed in the amorphous carbon layer, a sufficient contact area can be ensured between the negative electrode, furthermore, the lithium metal acting as the active material layer, and the solid electrolyte filled in the nanopores. Consequently, excellent contact characteristics between the negative electrode and the solid electrolyte, low interfacial resistance and high ionic conductivity can be achieved.

As a result, when the negative electrode of the present disclosure is used, it is possible to provide an all-solid-state battery which suppresses the formation of lithium dendrites, has a high energy density comparable to the case of applying a lithium metal negative electrode while exhibiting improved life characteristics, and ensures sufficient contact characteristics between the negative electrode and the solid electrolyte.

Such an all-solid-state battery can exhibit excellent cell performance and life characteristics, and can be very preferably used as a next-generation battery applied to an electric vehicle or the like.

### [BRIEF DESCRIPTION OF THE DRAWINGS]

Figs. 1a and 1b show the results of SEM and TEM analysis of the surface of each carbon layer in the step prior to the formation of the solid electrolyte material during the manufacturing process of the negative electrodes of Comparative Example 1 and Example 1;
Figs. 2a to 2c are diagrams showing the analysis results along with the corresponding SEM images, after elemental analysis of a carbon paper and a negative electrode by EDS, for each production step of Example 1;
Fig. 3 is a diagram showing the results of XPS analysis of each carbon layer in the step prior to the formation of the solid electrolyte material during the manufacturing process of the negative electrodes of Comparative Example 1 and Example 1;
Fig. 4 is a diagram showing the results of Raman spectral analysis of each carbon layer in the step prior to the formation of the solid electrolyte material during the manufacturing process of the negative electrodes of Comparative Example 1 and Example 1;
Fig. 5 is a diagram showing the results of BET analysis of the surface of each carbon layer in the step prior to the formation of the solid electrolyte material during the manufacturing process of the negative electrodes of Comparative Example 1 and Example 1;
Figs. 6a to 6d show the results of SEM analysis of the negative electrode surfaces (front and rear surfaces) after forming the solid electrolyte material in Example 1 and Comparative Example 1, respectively; and
Fig. 7 is a graph showing the results of comparative evaluation of the life characteristics of the batteries of Comparative Examples 2, 3, and Example 3.

### [DETAILED DESCRIPTION OF THE EMBODIMENTS]

Throughout the description, when a part is referred to as "including" a certain component, it means that the component may further include other components, without excluding the other components, unless otherwise stated. The term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party. The term " a step of doing something" or "a step of something" used throughout this specification does not mean a step for something.

Throughout the description, the term "combinations of" included in Markush type description means mixture or combination of one or more selected from a group consisting of components described in Markush type and thereby means that the disclosure includes one or more selected from the Markush group.

Based on the above definition, embodiments of the present disclosure will be described in detail. However, these embodiments are presented for illustrative purposes only, and the present disclosure is not limited thereby, and the present disclosure is only defined by the claims described below.

### Negative electrode for all-solid-state battery

According to one embodiment of the present disclosure, there is provided a negative electrode for an all-solid-state battery comprising:
a crystalline carbon layer;
an amorphous carbon layer which includes a carbon defect structure formed on the crystalline carbon layer and formed of electron-deficient carbon atoms, and in which nanoscale pores are formed in the carbon defect structure; and
a solid electrolyte material formed in the pores of the amorphous carbon layer.

The negative electrode of the one embodiment is manufactured by subjecting the surface of a crystalline carbon fabric providing a crystalline carbon layer to a plasma oxidation treatment, proceeding with surface coating of a metal organic framework (MOF) and carbonization thereof to form an amorphous carbon layer, and applying a slurry coating method or the like onto the amorphous carbon layer to form a solid electrolyte material, in the same manner as in a manufacturing method described later.

As a result of such chemical treatment on the crystalline carbon layer, a large number of electron-deficient carbon atoms are formed on the crystalline carbon layer, and also an amorphous carbon layer having a network structure including a carbon defect structure containing these electron-deficient carbon atoms can be formed.

Further, in the amorphous carbon layer, while the metal organic framework is carbonized and decomposed, a large number of nanopores (vacancies) having a size of 0.5 to 2 nm, or 0.8 to 1.5 nm, or 1.0 to 1.2 nm may be formed in the carbon defect structure.

For reference, the non-crystalline characteristics of the amorphous carbon layer, the formation of a carbon defect structure (formation of electron-deficient carbon atoms), and the formation of a large number of nanopores can be confirmed through TEM analysis, XPS analysis, Raman spectrum analysis, and BET analysis described later.

A large number of electron-deficient carbon atoms are included in the amorphous carbon layer, and a large number of nanopores having a size of 0.5 to 2 nm, more specifically, 1.0 to 1.2 nm, are formed. Therefore, electrons are donated from the conduction band of lithium, which serves to donate electrons to the carbon atoms, to the valence band of the carbon defect structure, so that lithium having the form of a large number of lithium ions and/or a lithium compound containing the same (e.g., lithium carbide compounds in the form of Li₃C₈), etc., can be well adsorbed, bonded and intercalated to the electron-deficient carbon atoms. In addition, the lithium ions or the like intercalated in this way function as a kind of nucleus, and lithium metal can be uniformly electrodeposited around the carbon defect structure centering on the lithium ions and the like.

The lithium ions and the like, and lithium metal electrodeposited around them can be intercalated and formed two-dimensionally into the large number of nanopores in one example, and can act as a lithium ion source for the negative electrode. Therefore, in the negative electrode of one embodiment, the lithium ion source may be included two-dimensionally on the same plane as (or inside) the amorphous carbon layer. Therefore, such amorphous carbon layer itself can function as an active material layer having a lithium ion source (lithium metal electrodeposited on an amorphous carbon layer) contained in a two-dimensional plane, and as a result, even if a lithium metal thin film or the like formed in the form of a three-dimensional additional thin film is not substantially added, it is possible to realize a high energy density comparable to the case where an existing lithium metal anode is applied.

Further, since the lithium ion source can be formed two-dimensionally in the carbon defect structure of the amorphous carbon layer without substantially adding a lithium metal thin film in the form of a three-dimensional additional thin film, it is possible to fundamentally suppress the growth of lithium dendrites or the like from a separate lithium metal thin film or the like further formed on the negative electrode. As a result, the all-solid-state battery including the negative electrode of one embodiment can exhibit significantly improved life characteristics and safety.

In addition, since a solid electrolyte material can be filled in a large number of nanopores formed in the amorphous carbon layer, a sufficient contact area can be ensured between the negative electrode, furthermore, the electrodeposited lithium metal acting as the active material layer, and the solid electrolyte filled in the nanopores. Therefore, excellent contact characteristics between the negative electrode and the solid electrolyte, low interfacial resistance and high ionic conductivity can be achieved.

Consequently, when the negative electrode of one embodiment is used, it enables the provision of an all-solid-state battery which suppresses the formation of lithium dendrites, exhibits improved life characteristics or the like, and also has a high energy density comparable to the case of applying a lithium metal negative electrode, and ensures sufficient contact characteristics between the negative electrode and the solid electrolyte.

On the other hand, various characteristics of the above-mentioned amorphous carbon layer, for example, non-crystallinity, the formation of a carbon defect structure (formation of electron-deficient carbon atoms) and the formation of plural nanopores can be confirmed by proceeding TEM analysis, XPS analysis, Raman spectrum analysis, and BET analysis on the surface of the negative electrode, for example, an amorphous carbon layer.

First, it can be confirmed through the results of TEM analysis that the amorphous carbon layer is formed of disordered and non-crystalline carbon atoms. Further, through the TEM images, it can be confirmed that it is formed in the form like a plurality of graphene layers having a thickness of about 1 to 100 nm, or about 2 to 70 nm, and that it is formed in the form of a plurality of defective layers.

Further, when the amorphous carbon layer was subjected to XPS analysis, it can be confirmed that a large number of nanopores (vacancies) were formed due to the carbonization and decomposition process after the formation of the metal organic framework in the manufacturing process. Further, from the results of XPS analysis, a carbon defect structure containing electron-deficient carbon atoms, for example, a separate peak derived from the nanopores, can be confirmed. In particular, the intensity ratio of a separate peak derived from such a carbon defect structure / a peak derived from a carbon having a sp2 orbital hybridization structure (a normal carbon having no electron-deficient state) is 0.3 or more, or 0.35 to 0.50, or 0.4 to 0.45, which confirms that electron-deficient carbon atoms and carbon defect structures including them are formed in a considerable proportion and at a high density.

Further, through the results of Raman spectrum analysis of the amorphous carbon layer, it can be confirmed that a peak of 1500 cm⁻¹ or less, or 1100 to 1500 cm⁻¹ derived from the carbon defect structure (D band; a peak derived from electron-deficient carbons of the carbon defect structure) exhibits an intensity equal to or greater than the peak observed at more than 1500 cm⁻¹ and 2000 cm⁻¹ or less (G band; a peak derived from normal carbon having a graphitic structure). More specifically, the intensity ratio defined as the peak of the D band / the peak of the P band may be 1 or more, or 1 to 1.5. or 1.1 to 1.3.

Even through the results of Raman spectrum analysis, it can be confirmed that electron-deficient carbon atoms and carbon defect structures including them are formed in a considerable proportion and at high density on the amorphous carbon layer contained in the negative electrode of the one embodiment.

In addition, from the results of Raman spectrum analysis of the amorphous carbon layer, an additional broad peak may be confirmed in a region of 2500 cm⁻¹ or more, or 2500 to 2900 cm⁻¹ , or 2600 to 2800 cm⁻¹. From this, it can be confirmed that the amorphous carbon layer may have a shape including a plurality of carbon layers.

In addition, the formation of a large number of nanopores contained in the amorphous carbon layer can be confirmed even through BET surface analysis using nitrogen adsorption, and specific analysis results thereof are also described in Experimental Examples described later.

As described above, in the amorphous carbon layer, since a carbon defect structure including plural nanopores and electron-deficient carbon atoms is formed at a high density, lithium ions and/or lithium compounds can be two-dimensionally intercalated through the carbon defect structure and nanopores, and the lithium metal electrodeposited around such lithium ions or the like may be two-dimensionally included on the amorphous carbon layer. The lithium ions and the like, and the lithium metal may function as a lithium ion source for the negative electrode.

As a result, while not substantially applying the lithium metal thin film, etc., which is additionally formed in the form of a three-dimensional separate thin film on the negative electrode, the amorphous carbon layer includes a high-density lithium ion source that is two-dimensionally formed therein, and can function as an active material layer by itself. Therefore, the all-solid-state battery including the negative electrode of one embodiment can exhibit high capacity and high energy characteristics comparable to or higher than those of an existing lithium metal battery. Furthermore, problems, such as lithium dendrite growing three-dimensionally outside the electrode from the lithium metal thin film formed or the like in the form of a separate thin film can also be fundamentally suppressed, whereby the all-solid-state battery including the negative electrode of one embodiment can exhibit significantly improved life characteristics and safety.

On the other hand, in the negative electrode of the above-mentioned one embodiment, a solid electrolyte material is contained in the nanopores of the amorphous carbon layer. As such solid electrolyte material is contained in a plurality of nanopores on the negative electrode, a solid electrolyte may have a large contact area with the negative electrode, furthermore, lithium metal acting as an active material layer, and the like. Therefore, the all-solid-state battery including the negative electrode of one embodiment can exhibit sufficient contact characteristics between the negative electrode and the solid electrolyte, low interfacial resistance, and high ionic conductivity.

Such a solid electrolyte material may be formed, for example, by coating and drying a slurry composition including a solid electrolyte, a binder and a solvent on the amorphous carbon layer, and as a result, can be impregnated and formed in the nanopores. Further, in the negative electrode finally formed by such a method, the solid electrolyte material present in the nanopores may include a solid electrolyte and a binder.

The type of the solid electrolyte is not particularly limited, and any solid electrolyte previously known to be usable in an all-solid-state battery, for example, an oxide-based, sulfide-based, or polymer-based solid electrolyte, can be used without particular limitation. However, the sulfide-based solid electrolyte can be appropriately used in consideration of the slurry coating processability and high ionic conductivity of the solid electrolyte material, a sulfide-based solid electrolyte.

Such a sulfide-based solid electrolyte may include, for example, a sulfide-based compound represented by the following Chemical Formula 1. Among the various sulfide-based compounds, an argyrodite-based compound exhibiting high ionic conductivity and excellent coating processability, for example, a complex compound of Li₂S-P₂S₅, and the like can be preferably used:

[Chemical Formula 1] M¹ₐM²_{b}S_{c}X¹_{d}

in the Chemical Formula 1, M¹ is at least one selected from an alkaline metal and an alkaline earth metal, M² is Sb, Sn, Mg, Ba, B, Al, Ga, In, Si, Ge, Pb, N, P, As, Bi, Ti, V, Cr, Mn, Fe, Co, Ni, Cu, Y, Zr, Nb, Mo, Tc, Ru, Rh, Pd, Ag, Hf, Ta, W or La, X¹is F, Cl, Br, I, Se, Te or O, 0<a≤6, 0<b≤6, 0<c≤6, and 0≤d≤6.

Further, the binder included with the solid electrolyte is a component added in consideration of the slurry coating processability and the adhesiveness of the solid electrolyte to the negative electrode, and any polymer binder previously known to be usable for forming an electrode, such as a positive electrode or a negative electrode can be used without particular limitation.

Examples of such a polymer binder may include butadiene rubber binders such as an acrylic binder, a polyvinylidene fluoride (PVDF)-based binder, a polytetrafluoroethylene (PTFE)-based binder, or a butadiene rubber-based binder, and it goes without saying that in addition to these, various polymer binders can be used.

On the other hand, in the negative electrode of the above-mentioned one embodiment, as the crystalline carbon layer supporting the amorphous carbon layer is formed from a crystalline carbon fabric, and the like, it includes a plurality of carbon fibers, and may have a thickness of 1 to 50 *µ*m, or 2 to 30 *µ*m, or 1 to 10 *µ*m. Thereby, the negative electrode can exhibit appropriate mechanical and electrochemical characteristics.

This crystalline carbon layer can function as a kind of negative electrode current collector while supporting the amorphous carbon layer functioning as the active material layer, whereby in the negative electrode of one embodiment, it is also possible to omit a separate metal current collector.

However, the negative electrode of one embodiment may include only a crystalline carbon layer functioning as the current collector, an amorphous carbon layer functioning as an active material layer including the lithium ion source described above, and a solid electrolyte material formed in the nanopores of the amorphous carbon layer, but additionally, it can further include a metal current collector such as a copper current collector, a nickel current collector, or a stainless (SUS) current collector for supporting the crystalline carbon layer. Since such an additional metal current collector may follow the configuration of a metal current collector in an electrode of a general all-solid-state battery or lithium secondary battery, an additional description thereof will be omitted.

### Manufacturing method of negative electrode

On the other hand, the negative electrode for an all-solid-state battery as described above can be manufactured by a method comprising the steps of: subjecting a crystalline carbon fabric containing plural carbon fibers to an oxygen plasma treatment to oxidize the surface; reacting the surface-oxidized crystalline carbon fabric, a nitrogen precursor and a metal precursor to form a carbon fabric coated with a metal organic framework (MOF); calcinating and carbonizing the carbon fabric coated with the metal organic framework at a temperature of 700°C or more to form an amorphous carbon layer on the crystalline carbon fabric; and coating and drying a slurry composition containing a solid electrolyte, a binder and a solvent on the amorphous carbon layer.

In addition, after forming the negative electrode in this way, the method may further include electrochemically reacting the negative electrode or a battery including the same, bonding the lithium ion or lithium carbide compound onto the amorphous carbon layer and electrodepositing a lithium metal around the lithium ion or lithium carbide compound.

According to such a manufacturing method, the crystalline carbon fabric corresponding to the crystalline carbon layer can be subjected to an oxygen plasma treatment to oxidize the surface, and the surface-oxidized crystalline carbon fabric, a nitrogen precursor and a metal precursor can be reacted to form a carbon fabric coated with a metal organic framework (MOF). Then, as it is subjected to high-temperature calcination and carbonization to decompose and remove the metal organic framework, a carbon defect structure formed of electron-deficient carbon atoms and an amorphous carbon layer including the same can be formed in the portion where the metal organic framework has been formed.

Subsequently, a solid electrolyte, for example, a slurry composition including a sulfide solid electrolyte, a binder and a solvent is coated and dried on the amorphous carbon layer, so that a solid electrolyte material including a solid electrolyte and a binder can be impregnated and formed in the nanopores of the amorphous carbon layer.

Further, optionally, the solid electrolyte material is electrochemically reacted with a negative electrode formed in the nanopores or a battery including the same, the lithium ion or lithium carbide compound is intercalated onto the amorphous carbon layer, and lithium metal is electrodeposited around them. Thereby, it is possible to form a lithium ion source formed two-dimensionally in the amorphous carbon layer, which makes it possible to manufacture the negative electrode of one embodiment exhibiting the above-mentioned excellent characteristics.

As already described above, the lithium ion or lithium metal can be two-dimensionally intercalated and formed around the carbon defect structure in the amorphous carbon layer. Therefore, unlike a lithium metal thin film that is three-dimensionally added separately, lithium dendrite growth or the like is not caused therefrom. Further, the lithium metal or the like acts as a lithium ion source for the negative electrode, so that the amorphous carbon layer including the same can function as an active material layer by itself.

In the manufacturing method of the other embodiment, as the crystalline carbon fabric, for example, a carbon paper formed of carbon fibers having a diameter of 1 to 8 *µ*m, or 3 to 5 *µ*m can be used, and additionally, any other equivalent crystalline carbon fabric can be used without particular limitation.

Further, in the oxygen plasma treatment step, one surface or both surfaces of the crystalline carbon fabric can be surface-treated with oxygen plasma or mixed gas plasma in which an inert gas such as oxygen and argon is mixed, thereby performing surface oxidation, which makes it possible to define the portion where the metal organic framework and the carbon defect structure are formed later.

And, in the step of forming the carbon fabric coated with the metal organic framework, the type of the metal organic framework or the type of the nitrogen precursor and the metal precursor for the formation thereof are not particularly limited. This is because, in the manufacturing method of another embodiment, the metal organic framework is carbonized in a subsequent step to remove all remaining metals and organic components except carbon, and the carbon component also contributes only to the formation of a carbon defect structure.

However, a specific example of the metal organic framework that can be formed in the above step may include at least one compound selected from the group consisting of Zn₂DOT (MOF-74), Cu₂(BDC-Br)₂(H₂O)₂ (MOF-101), Zn₄O(BTB)₂ (MOF-177), [Fe₃O(BDC)₃(DMF)₃][FeCl₄].(DMF)₃ (MOF-235), Al(OH)(BPYDC) (MOF-253), Zn₄O(BDC)₃. 7DEF.3H₂O (IRMOF-1 (MOF-5)), Zn₄O(TPDC)₃. 17DEF.2H₂O (IRMOF-16), Zr₆O₆(BDC)₆ (UiO-66), Zr₆O₆(BPDC)₆ (UiO-67), Zr₆O₆(TPDC)₆ (UiO-68), Al(OH)(BDC) (MIL-53), Al(OH)(BDC-NH₂) (MIL-53(Al)-NH₂), Fe₃O(MeOH)₃(O₂CCH=CHCO2)₃.MeCO₂.nH₂O (MIL-88A), Fe₃O(MeOH)₃(O₂C(CH₂)2CO₂)₃.AcO.(MeOH)_{4.5} (MIL-88-Fe), 2Fe₃O(OH)(H₂O)₂(BDC-Me₂)₃ (MIL-88B-4CH3), Fe^{III}₃O(H₂O)₂F.(BTC)₂.nH₂O (MIL-100-Fe), Cr₃O(H₂O)₂F.(BDC)₃. nH2O (MIL-101), Cu₃(BTC)₂ (HKUST-1 (MOF-199)), Gd₂(BDC-NH₂)₃(DMF)₄ (LIC-10), Zn(MIM)₂ (ZIF-8), Zn(FIM)₂ (ZIF-90), Cu₂(PZDC)₂(4,4'-BPY) (CPL-2), [Cu(HFBBA)(phen)₂](H2HFBBA)₂(H₂O)(HCO₂) (F-MOF-1), and Cu₂₄(m-BDC)₂₄(DMF)₁₄(H2O)₁₀ (MOP-1). In addition to these, all the various metal organic frameworks that can be formed on the carbon layer can be formed without particular limitation.

However, in order to properly form a carbon defect structure by the formation and carbonization of such a metal organic framework, a metal organic framework in the form of a metal zeolite-imidazole structure such as ZIF-8 can be preferably formed.

Further, those skilled in the art can appropriately select and use a nitrogen precursor and a metal precursor corresponding thereto according to the type of the metal organic frameworks. For example, in forming the metal organic framework in the form of the metal zeolite-imidazole structure, an imidazole-based compound such as methyl imidazole can be preferably used as a nitrogen precursor, and in addition to these, various nitrogen precursors can be selected and used according to the type of the above-mentioned metal organic frameworks.

Further, for the type of the metal precursor that reacts with the nitrogen precursor, those skilled in the art can obviously select and use an appropriate metal-containing compound according to the type of the above-mentioned metal organic frameworks.

Examples of the metal precursor include at least one metal-containing compound selected from the group consisting of zinc (Zn), aluminum (Al), copper (Cu), zirconium (Zr), iron (Fe), chromium (Cr), and gadolinium (Gd), and various salts, such as nitrates, hydroxides, or sulfates of these metals, or compounds in the form of hydrates and/or solvates thereof can be used without particular limitation.

On the other hand, in the step of forming the carbon fabric coated with the above-mentioned metal organic framework, the surface-oxidized crystalline carbon fabric, the nitrogen precursor, and the metal precursor can be reacted in a polar organic solvent such as water or methanol under stirring, and after the reaction, washing and drying steps using a polar organic solvent can also be further performed. Specific progress conditions of these washing and drying steps are specifically described in Examples described later.

On the other hand, after forming the carbon fabric coated with the metal organic framework, the carbon fabric can be calcinated and carbonized at a temperature of 700 °C or more, or 700 to 1300°C, or 800 to 1200°C. When such carbonization step is performed, the metal organic framework is carbonized, decomposed and removed, and an amorphous carbon layer containing the carbon defect structure described above can be formed.

Subsequently, optionally, an inorganic impurity removal step using hydrochloric acid, a washing step, and a drying step may be further performed.

Then, a step of coating the slurry composition containing the solid electrolyte, the binder, and the solvent on the amorphous carbon layer and selectively drying it can be performed. At this time, in order to allow the solid electrolyte material containing the solid electrolyte and the binder to be uniformly formed in the nanopores, the coating step can be performed by a method of bar coating or dip coating.

However, since the specific types of solvents contained in the slurry composition and the specific progress conditions of the coating step are well known through the already known Korean Patent No. 1506833, and the like, and thus, an additional description thereof will be omitted.

On the other hand, after forming the solid electrolyte material by the above-mentioned method, the negative electrode is electrochemically reacted, and a lithium ion or a lithium carbide compound is bonded and intercalated onto the amorphous carbon layer, and by using lithium ions or the like as a nucleus, the lithium metal can be electrodeposited around them.

This electrochemical reaction may proceed as a separate lithium ion intercalation reaction or lithium metal electrodeposition reaction during the manufacture of the negative electrode, but the reaction may be replaced by the progress of the initial charge/discharge step after the manufacture of the lithium secondary battery. For example, the lithium ions or lithium carbide compounds are bonded by an electrochemical reaction that occurs naturally during the process of the initial charge/discharge step, and intercalation of lithium ions and the like may occur therefrom.

### All-solid-state battery

According to another embodiment of the present disclosure, an all-solid-state battery including the above-mentioned negative electrode is provided. The all-solid-state battery of another embodiment may include a positive electrode containing a positive electrode current collector and a lithium composite oxide-based positive electrode active material layer formed on the positive electrode current collector; and the negative electrode of one embodiment described above, and further include an additional solid electrolyte layer interposed between the positive electrode and the negative electrode.

The all-solid-state battery of another embodiment including the negative electrode of the one embodiment described above can exhibit improved life characteristics and safety by fundamentally suppressing the growth of lithium dendrites, while exhibiting high energy density and high capacity characteristics comparable to batteries using existing lithium metal negative electrode. In addition, the solid electrolyte material is uniformly formed in the nanopores, and thus, sufficient contact characteristics between the negative electrode and the solid electrolyte, low interfacial resistance, and excellent ionic conductivity can be ensured.

In the all-solid-state battery of this other embodiment, an additional solid electrolyte layer may be further included between the positive electrode and the negative electrode. Such solid electrolyte layer may include the solid electrolyte and binder identical to or different from the solid electrolyte material contained in the nanopores of the negative electrode.

Further, such solid electrolyte layer can be formed by coating a slurry composition containing the solid electrolyte, a binder and a solvent onto the electrode of the positive electrode or the negative electrode, or by coating and drying the slurry composition onto a separate release paper to form a solid electrolyte layer and then laminating it on the electrode, or by impregnating the solid electrolyte into a porous nonwoven fabric. However, since the composition and formation method of the additional solid electrolyte layer may follow the composition and formation method of the solid electrolyte layer of the all-solid-state battery conventionally known in the art, an additional description thereof will be omitted.

Due to the addition of such an additional solid electrolyte layer, it is possible to further improve the ionic conductivity and contact characteristics between the electrode and the solid electrolyte. Also, when the porous nonwoven fabric or the like is used, mechanical properties of the solid electrolyte and the all-solid battery can be further improved.

On the other hand, in the all-solid-state battery of the other embodiment, the remaining components such as the positive electrode excluding the negative electrode and the solid electrolyte layer can follow the configuration of a conventional all-solid-state battery. Such a positive electrode may include a positive electrode current collector and a positive electrode active material layer disposed on the positive electrode current collector.

The positive electrode is manufactured by mixing an active material and a binder, optionally, the above-mentioned solid electrolyte, for example, the same sulfide solid electrolyte as those contained in the negative electrode or additional solid electrolyte layer, a conductive material, a filler, and the like in a solvent to prepare an electrode mixture slurry, and then coating this electrode mixture slurry onto each positive electrode current collector. At this time, the solid electrolyte and the binder are the same as those described above with respect to the negative electrode, and the like, and the remaining positive electrode manufacturing methods are widely known in the art, and thus, a detailed description thereof will be omitted herein.

Meanwhile, in the case of the positive electrode active material, it is not particularly limited as long as it is a lithium composite oxide-based material capable of reversibly intercalating and de-intercalating lithium ions. For example, it may include one or more of complex oxides of cobalt, manganese, nickel, iron, or a combination of metals; and lithium.

In a more specific example, a compound represented by any of the following chemical formulas can be used as the positive electrode active material: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃(0 ≤ f ≤ 2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Of course, it is also possible to use those having a coating layer on the surface of the above-mentioned compound, or it is possible to use a mixture of the above-mentioned compound with a compound having a coating layer. The coating layer may include a coating element compound such as coating element oxide, hydroxide, coating element oxyhydroxide, coating element oxycarbonate or coating element hydroxycarbonate . The compounds forming these coating layers may be amorphous or crystalline. As a coating element included in the coating layer, Mg, Al, Co, K, Na, Ca, Si, Ti, V, Sn, Ge, Ga, B, As, Zr or a mixture thereof can be used. As the coating layer forming process, any coating method can be used as long as it can be coated by a method (e.g., spray coating or dipping method, etc.) that does not adversely affect the physical properties of the positive electrode active material by using these elements in the compound. Since this is a content that can be widely understood by those worked in the art, and thus, detailed descriptions thereof will be omitted.

The positive electrode current collector is typically fabricated to a thickness of 3 to 500 *µ*m. The positive electrode current collector is not particularly limited as long as a corresponding battery has high conductivity without causing a chemical change in the battery, and for example, may be formed of stainless steel, aluminum, nickel, titanium, baked carbon, or a material formed by surface-treating a surface of stainless steel or aluminum with carbon, nickel, titanium, silver, or the like. The current collector may have fine protrusions and depressions formed on a surface thereof to enhance adherence of a positive electrode active material, and may be formed in various forms such as a film, a sheet, a foil, a net, a porous body, a foaming body, and a non-woven fabric structure.

The conductive material is not particularly limited as long as a corresponding battery has high conductivity without causing a chemical change in the battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whisker such as zinc oxide and potassium titanate; conductive metal oxides such as titanium oxide; conductive materials such as polyphenylene derivatives can be used.

The all-solid-state battery of the one embodiment may not only be used in a unit cell used as a power source for a small device, but also it can be used as a unit cell in a medium or large-sized battery module including a plurality of battery cells. Furthermore, a battery pack including the battery module may be configured.

Hereinafter, preferred examples of the present disclosure, comparative examples, and test examples for evaluating them are described. However, the following examples are only preferred examples of the present disclosure, and the present disclosure is not limited to the following examples.

### Example 1: Manufacture of negative electrode for all-solid-state battery

Carbon paper (HCP010N, Shanghai Hesen Electric Co. Ltd. USA) was purchased, and both front and back surfaces of the carbon paper were surface-oxidized using oxygen plasma treatment. At this time, the plasma treatment was carried out by a method of treating the plasma on the front surface and the back surface for 15 minutes, respectively, while flowing a mixed gas of oxygen and argon gas.

Next, at room temperature, the surface-oxidized carbon paper was placed in 100 ml of methanol in which 2-methyl imidazole (13.136 g, 8 eq) was dissolved, and the mixture was stirred for 6 hours. Then, 100 mL of methanol in which zinc nitrate hexahydrate (5.95 g, 1 eq) was dissolved was added to the solution, and then the mixture was stirred for 12 hours. Thereby, a carbon paper coated with a zinc-organic framework (ZLF-8) was formed.

After completion of the stirring, the carbon paper coated with zinc-organic framework was taken out and washed with stirring 3-5 times using pure methane.

Then, the carbon paper was kept and dried for 12 hours, in an oven at a temperature of about 80°C and in a vacuum state. The process up to the drying was set to once, and the zinc-organozinc framework coating was repeated twice in total.

In order to carbonize the dried carbon paper, the carbon paper was heated up to 1000°C at a temperature rising rate of 5°C min⁻¹, and then calcinated and carbonized in a nitrogen atmosphere for 5 hours.

The carbonized carbon paper was stirred in a 2 M hydrochloric acid solution for 6 hours to remove impurity minerals (Zn). The carbon paper was taken out of hydrochloric acid, immersed in deionized water (DI), washed three times for 20 minutes each, and then finally dried in a vacuum oven at 70°C for 7 hours. According to the above-mentioned process, an amorphous carbon layer was formed on the crystalline carbon layer of the carbon paper.

Meanwhile, Li₂S-P₂S₅ as a sulfide solid electrolyte and NBR as a binder were added to anisole in a weight ratio of 95:5 to prepare a slurry composition (solid content: 60 wt.%) for forming a solid electrolyte material. This slurry composition was mixed and formed in a Thinky mixer at a speed of 2000 rpm for 1 minute.

The slurry composition was bar-coated onto the amorphous carbon layer, and dried overnight at room temperature/atmospheric pressure, so that a solid electrolyte material was formed on the amorphous carbon layer.

Meanwhile, the electrochemical reaction for the negative electrode of Example 1 was replaced by the charge/discharge process after forming the battery of Example 2. Through the above process, the negative electrode of Example 1 was manufactured.

### Example 2: Manufacture of an all-solid-state battery including the negative electrode of Example 1

First, a positive electrode and an additional solid electrolyte layer were prepared by the following method.

LiNi_{0.8}Co_{0.1}Mn_{0.1}O₂ as a positive electrode active material, Li₂S-P₂S₅ as a sulfide solid electrolyte, NBR as a binder, and VGCF as a conductive material were added to anisole in a weight ratio of 75.5:22.1:1.5:1 to prepare a slurry composition (solid content 70 wt.%) for forming a positive electrode active material layer. This was coated onto one surface of an aluminum thin film (thickness: about 10 *µ*m) and dried at 60°C for 6 hours to prepare a positive electrode.

Meanwhile, Li₂S-P₂S₅ as a sulfide solid electrolyte, and NBR as a binder were added to anisole in a weight ratio of 95:5 to prepare a slurry composition (solid content: 60 wt.%) for forming a solid electrolyte layer. This slurry composition was mixed and formed in a Thinky mixer at a speed of 2000 rpm for 1 minute. The slurry composition coated onto one surface of a release paper made of polyethylene terephthalate, and dried overnight at room temperature and atmospheric pressure conditions and the release paper was removed to prepare a solid electrolyte layer. At this time, the thickness of the solid electrolyte layer was 30 *µ*m.

Next, the positive electrode and the solid electrolyte layer were laminated and pressurized at a pressure of 500 MPa for 5 minutes to prepare a laminate of the positive electrode and the solid electrolyte layer. In the obtained laminate, the porosity of the positive electrode was 15 vol%, and the porosity of the solid electrolyte layer was 5 vol%.

Subsequently, the laminate and the negative electrode prepared in Example 1 were sequentially laminated and pressed at 200 MPa for 5 minutes to obtain an electrode assembly. In each of the above-mentioned steps, the pressing was performed using a CIP (cold isotatic pressing) apparatus. Through the above-mentioned process, the all-solid-state battery of Example 2 was manufactured.

### Comparative Examples 1 and 2: Manufacture of negative electrode and all-solid-state battery

The slurry composition having the same composition as that of Example 1 was coated onto the carbon paper used as the first raw material in Example 1 by the same method to form a solid electrolyte material.

An all-solid-state battery containing the negative electrode of Comparative Example 1 instead of the negative electrode of Example 1 was manufactured by the same method as in Example 2, which was used as the all-solid-state battery of Comparative Example 2. In Comparative Examples 1 and 2 as described above, the electrochemical reaction with the negative electrode was replaced by the charge/discharge process after the battery was manufactured.

### Comparative Example 3: Manufacture of negative electrode and all-solid-state battery

Instead of the negative electrode of Example 1, a lithium metal thin film formed to a thickness of 20 um was used as the negative electrode. Specifically, the negative electrode was prepared in a state in which a lithium metal thin film having a thickness of 20 *µ*m was attached to the surface of a nickel current collector having a thickness of 10 *µ*m.

Further, a positive electrode, a solid electrolyte layer, and an all-solid-state battery were sequentially manufactured by the following method. First, the positive electrode was formed in the same manner as in Example 2.

Meanwhile, Li₂S-P₂S₅ as a sulfide solid electrolyte and NBR as a binder were added to anisole in a weight ratio of 95:5 to prepare a slurry composition (solid content 60 wt.%) for forming a solid electrolyte layer. This slurry composition was mixed and formed in a Thinky mixer at a speed of 2000 rpm for 1 minute. The slurry composition coated onto one surface of a release paper made of polyethylene terephthalate, and dried overnight at room temperature and atmospheric pressure conditions and the release paper was removed to prepare a first solid electrolyte layer. Further, a separate second solid electrolyte layer was prepared in the same manner as the first solid electrolyte layer. At this time, the thickness of each solid electrolyte layer was 30 *µ*m.

Next, the positive electrode and the first solid electrolyte layer were laminated and pressed at a pressure of 500 MPa for 5 minutes to prepare a laminate of the positive electrode and the first solid electrolyte layer. Then, a second solid electrolyte layer was further laminated on the above laminate and pressed at a pressure of 500 MPa for 5 minutes to prepare a laminate of the positive electrode and the first and second solid electrolyte layers.

Subsequently, the laminate and the negative electrode including the lithium metal thin film were sequentially laminated and pressed at 200 MPa for 5 minutes to obtain an electrode assembly. In each of the above-mentioned steps, the pressing was performed using a CIP (cold isotatic pressing) apparatus. Through the above-mentioned process, the all-solid-state battery of Comparative Example 3 was manufactured.

### Experimental Example 1: SEM and TEM analysis of the carbon layer of the negative electrode

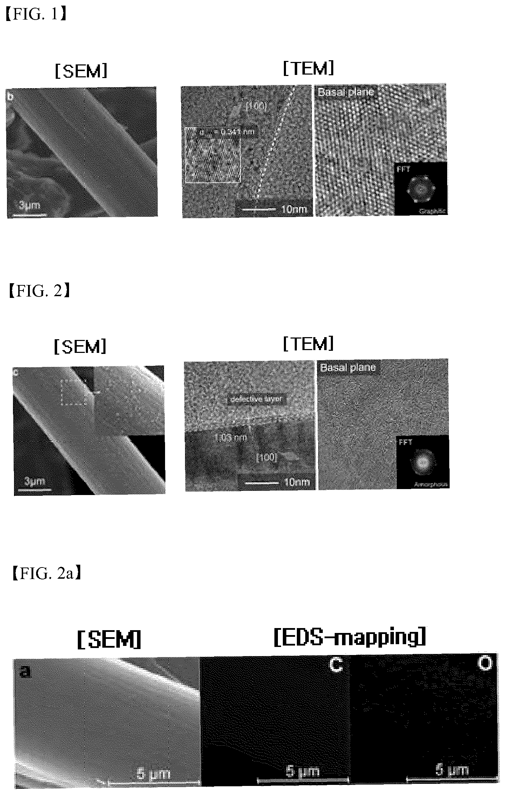

In the step prior to the formation of the solid electrolyte material during the manufacturing process of the negative electrodes of Comparative Example 1 and Example 1, the surface of each carbon layer was analyzed by SEM and TEM, respectively, and the SEM and TEM images are shown in Figs. 1a and 1b, respectively.

First, referring to Fig. 1a, it is confirmed through the SEM image that the carbon layer included in the negative electrode of Comparative Example 1 is an electrode in which carbon fibers having a diameter of 3~5 um were aggregated. In contrast, referring to Fig. 1b, it is confirmed that the negative electrode of Example 1 was formed of a network-shaped defective carbon layer on the fiber surface of the crystalline carbon layer.

Further, referring to the TEM image in Fig. 1a, in the carbon layer of Comparative Example 1, a 100 crystal plane, which is a regular carbon crystal plane, is observed (the 100 crystal plane has a lattice spacing of 0.341 nm), and it can be seen through FFT analysis that the electrode is composed of a crystalline carbon layer in which a very regular carbon arrangement exists. In contrast, referring to the TEM image in Fig. 1b, it can be seen that a plurality of defective layers having a thickness of about 1.03 nm are generated on the carbon layer surface of Example 1, and unlike Comparative Example 1, the FFT analysis showed that disordered and amorphous carbon is generated.

### Experimental Example 2: EDS analysis of carbon layer of negative electrode

In the step prior to the formation of the solid electrolyte material, the carbon paper and negative electrode were subjected to elemental analysis with EDS for each manufacturing step of Example 1, and the analysis results are shown in Figs. 2a to 2c along with their corresponding SEM images. The element content for each manufacturing step based on the analysis results is summarized in Table 1 below. During the EDS element analysis, in order to confirm whether the zinc-organic framework (ZLF-8) was formed and removed by carbonization during the manufacturing process, the contents of four elements of carbon, oxygen, nitrogen and zinc were analyzed.

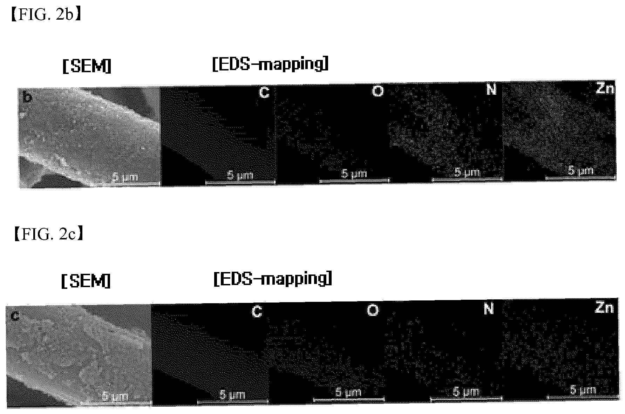

Specifically, (a) the result of elemental analysis of carbon paper in the first raw material state (Fig. 2a), (b) the result of elemental analysis immediately before carbonization (Fig. 2b), and (c) the result of elemental analysis after the formation of the amorphous carbon layer by carbonization (Fig. 2c) were discriminated and respectively summarized.

**[Table 1]**

| | **Weight %** | | | |
|---|---|---|---|---|
| | **Carbon** | **Oxygen** | **Nitrogen** | **Zinc** |
| (a) raw material state | 97.48 | 2.52 | - | - |
| (b) immediately before carbonization | 87.67 | 2.31 | 6.97 | 3.05 |
| (c) carbon layer after carbonization | 96.92 | 3.08 | 0.00 | 0.00 |

Referring to the elemental analysis results in Table 1 and Figs. 2a to 2c, it was confirmed that by the reaction of the zinc precursor and the nitrogen precursor (methylimidazole) before the carbonization step, a zinc-organic framework is formed and coated onto the carbon paper, and then completely removed by carbonization and calcination, and thus does not remain in the final negative electrode and amorphous carbon layer.

Therefore, it was confirmed that the characteristics of the negative electrode finally formed in Example 1 depend only on the formation of a carbon defect structure, and not on the zinc-organic framework.

### Experimental Example 3: Carbon defect structure of amorphous carbon layer and nanopore analysis (XPS, Raman spectrum and BET surface analysis)

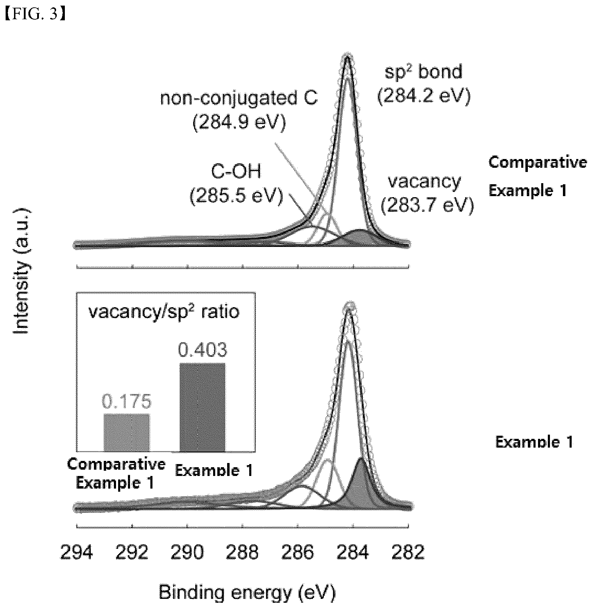

First, in the step prior to the formation of the solid electrolyte material during the manufacturing process of the negative electrodes of Comparative Example 1 and Example 1, each carbon layer was analyzed by XPS, and the analysis results are shown in Fig. 3. Referring to Fig. 3, it was confirmed that in Example 1, due to the process in which a zinc-organic framework was formed and coated, and then carbonized and removed, a large number of nanopores (vacancies) were formed on the carbon layer.

Further, from the results of XPS analysis of Comparative Examples 1 and Example 1, a carbon defect structure including electron-deficient carbon atoms, particularly, a separate peak (non-conjugated C peak) derived from the nanopores was confirmed. In particular, the analysis result of Example 1 showed that the intensity ratio of a separate peak derived from such a carbon defect structure / a peak derived from a carbon having a sp2 orbital hybridization structure (normal carbon having no electron deficiency state) is 0.403, which appears strong as compared with Comparative Example 1 in which this intensity ratio is 0.175.

Through this, it was confirmed that a carbon defect structure including nanopores and electron-deficient carbon atoms was formed at a high density on the amorphous carbon layer contained in the negative electrode of Example 1.

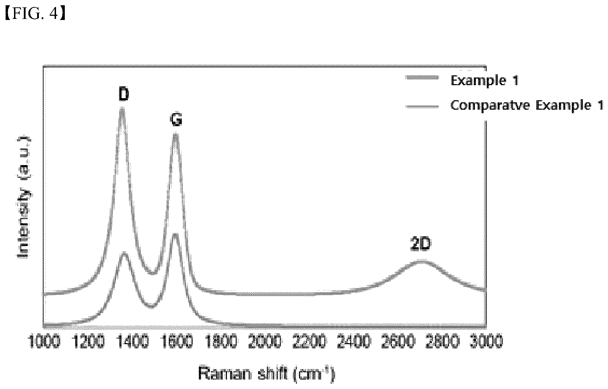

Meanwhile, the carbon layers formed in Comparative Example 1 and Example 1 were subjected to Raman spectrum analysis, respectively, and the analysis results are shown in Fig. 4.

Referring to Fig. 4, it was confirmed that in the electrode of Example 1, a peak of 1100 to 1500 cm⁻¹ derived from the carbon defect structure (D band; a peak derived from electron-deficient carbon of the carbon defect structure) shows an intensity greater than or equal to the peak (G band; peak derived from normal carbon having a graphitic structure) observed at more than 1500 cm⁻¹ and less than 2000 cm⁻¹, and their intensity ratio, defined as I_{D}/I_{G} ratio, is as high as 1.124. In contrast, in the electrode of Comparative Example 1, it was confirmed that the intensity ratio of the peak defined by the I_{D}/I_{G} ratio is as low as 0.788.

From the results of Raman spectrum analysis, it was confirmed that in the negative electrode of Example 1, electron-deficient carbon atoms and carbon defect structures including them were formed in a considerable proportion and at a high density on the amorphous carbon layer.

In addition, from the results of Raman spectrum analysis of Example 1, a 2D peak for determining the number of graphene layers was additionally confirmed with considerable intensity in the vicinity of about 2700 cm⁻¹. Such a peak was not confirmed in Comparative Example 1. From the point that this 2D peak appears with an intensity ratio of about 0.34 compared to the G peak, it was confirmed that the amorphous carbon layer included in the negative electrode of Example 1 is formed into a shape including a plurality of graphene layers. For reference, it is known that a value with a 2D/G ratio of about 4 usually means a single layer graphene, and a value of 1 or less means a multilayer graphene.

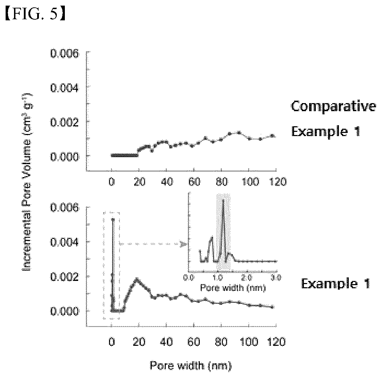

Finally, the carbon layer surfaces of Example 1 and Comparative Example 1 were subjected to BET analysis, and the results are shown in Fig. 5. More specifically, BET pore analysis was performed using nitrogen adsorption. Referring to Fig. 5, it can be confirmed that in the carbon layer of Comparative Example 1, pores between 20~120 nm are developed, and that in the electrode of Example 1, nanopores having a size of about 1.1 nm are mainly developed. It was confirmed that the nanopores of Example 1 correspond to the high-density carbon defect structure confirmed from the XPS and Raman spectrum analysis results.

### Experimental Example 4: Evaluation of negative electrode surface characteristics after formation of solid electrolyte material

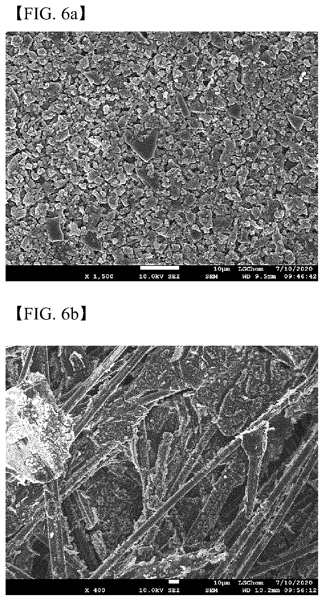

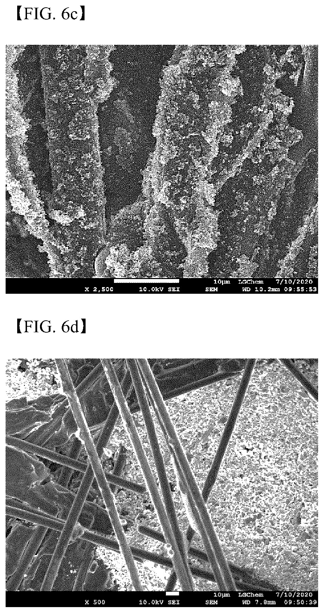

In Example 1 and Comparative Example 1, the surface of the negative electrode after forming the solid electrolyte material was analyzed by SEM and shown in Figs. 6a to 6d. More specifically, Fig. 6a is a SEM photograph of the front surface of the negative electrode after forming the solid electrolyte material in Example 1, Figs. 6b and 6c are SEM pictures of the rear surface of such a negative electrode. Further, Fig. 6d is an SEM photograph of the rear surface of the negative electrode after forming the solid electrolyte material in Comparative Example 1.

Referring to Figs. 6a to 6d, it was confirmed that in the negative electrode of Example 1, the solid electrolyte material was sufficiently penetrated from the front surface to the rear surface of the negative electrode and was uniformly formed in the nanopores of the amorphous carbon layer. In contrast, in the negative electrode of Comparative Example 1, the solid electrolyte material did not sufficiently penetrate/form up to the rear surface of the negative electrode.

From the above, it was confirmed that, in the negative electrode of Example 1, sufficient contact characteristics between the negative electrode and the solid electrolyte can be ensured due to the nanopore structures of the amorphous carbon layer,

### Experimental Example 5: Evaluation of life characteristics of all-solid-state battery

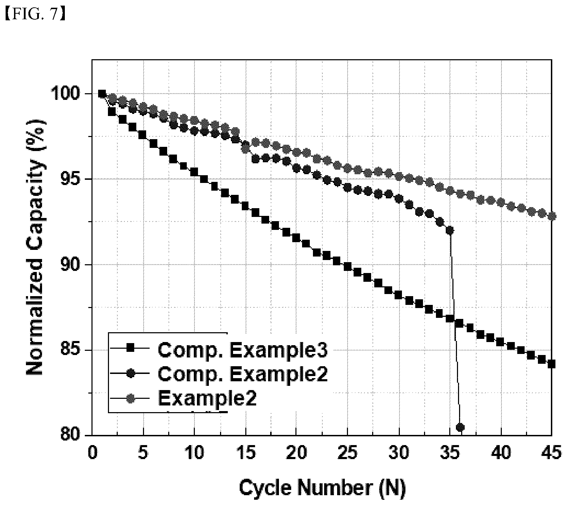

For the batteries of Example 2, Comparative Examples 2 and 3, the life characteristics were comparatively evaluated, and the results are shown in Fig. 7. More specifically, these life characteristics were evaluated by the following method.

First, an all-solid-state battery having a capacity of 20.8 mAh was manufactured by the methods of the Examples and Comparative Examples, charged in CC-CV mode at 4.25V (0.05C cut off) 0.1C, and discharged to 3V at 0.1C to perform a charge/discharge test and electrochemical reaction. This charge/discharge test cycle was repeated, and the capacity retention rate of the discharge capacity was measured.

Referring to Fig. 7, it was confirmed that the battery of Example 2 exhibited significantly improved capacity retention rate and life characteristics as compared with the batteries of Comparative Examples 2 and 3. This is expected to be because the growth of lithium dendrites is effectively suppressed in the negative electrode and the battery of Example 2, and excellent contact characteristics and ionic conductivity between the negative electrode and the solid electrolyte are exhibited.

Compared to this, the battery of Comparative Example 2 was not only inferior in capacity retention rate and life characteristic to that of Example 2, but also had a short circuit during the evaluation of the life characteristics, and the evaluation of the life characteristic was stopped at a time point of about 35 cycles. In addition, it was confirmed that the battery of Comparative Example 3 exhibited a life characteristic significantly inferior to that of Examples due to the growth of lithium dendrites in the negative electrode and the like.

## Claims

1. A negative electrode for an all-solid-state battery comprising:
a crystalline carbon layer;
an amorphous carbon layer which includes a carbon defect structure formed on the crystalline carbon layer and formed of electron-deficient carbon atoms, and in which nanoscale pores are formed in the carbon defect structure; and
a solid electrolyte material formed in the pores of the amorphous carbon layer.

2. The negative electrode for an all-solid-state battery according to claim 1, wherein the solid electrolyte material comprises a sulfide solid electrolyte and a binder.

3. The negative electrode for an all-solid-state battery according to claim 2, wherein the sulfide solid electrolyte comprises a sulfide-based compound of the following Chemical Formula 1:
[Chemical Formula 1] M¹ₐM²_{b}S_{c}X¹_{d}
in the Chemical Formula 1, M¹ is at least one selected from an alkaline metal and an alkaline earth metal, M² is Sb, Sn, Mg, Ba, B, Al, Ga, In, Si, Ge, Pb, N, P, As, Bi, Ti, V, Cr, Mn, Fe, Co, Ni, Cu, Y, Zr, Nb, Mo, Tc, Ru, Rh, Pd, Ag, Hf, Ta, W or La, X¹ is F, Cl, Br, I, Se, Te or O, 0<a≤6, 0<b≤6, 0<c≤6, and 0≤d≤6.

4. The negative electrode for an all-solid-state battery according to claim 2, wherein the binder comprises an acrylic binder, a polyvinylidene fluoride (PVDF)-based binder, a polytetrafluoroethylene (PTFE)-based binder, or a butadiene rubber-based binder.

5. The negative electrode for an all-solid-state battery according to claim 1, wherein the pores have a diameter of 0.5 to 2 nm.

6. The negative electrode for an all-solid-state battery according to claim 1, wherein the crystalline carbon layer comprises a plurality of carbon fibers, and has a thickness of 1 to 50 *µ*m.

7. The negative electrode for an all-solid-state battery according to claim 1, wherein the amorphous carbon layer has a thickness of 1 to 100 nm.

8. The negative electrode for an all-solid-state battery according to claim 1, which further comprises a lithium ion or lithium carbide compound intercalated into the amorphous carbon layer, and a lithium metal electrodeposited around the lithium ion or lithium carbide compound.

9. The negative electrode for an all-solid-state battery according to claim 8, wherein the lithium ion or lithium carbide compound, and the lithium metal are two-dimensionally bonded on the same plane as the amorphous carbon layer.

10. The negative electrode for an all-solid-state battery according to claim 9, wherein lithium derived from the lithium ion or lithium carbide compound provides electrons to electron-deficient carbon atoms, and is bonded to the carbon defect structure.

11. The negative electrode for an all-solid-state battery according to claim 1, wherein the solid electrolyte material is formed by coating a slurry composition including a sulfide solid electrolyte, a binder and a solvent onto the amorphous carbon layer.

12. An all-solid-state battery comprising:
a positive electrode including a positive electrode current collector, and a lithium composite oxide-based positive electrode active material layer formed on the positive electrode current collector;
the negative electrode of any one of claims 1 to 11; and
an additional solid electrolyte layer interposed between the positive electrode and the negative electrode.

13. The all-solid-state battery according to claim 12, wherein the solid electrolyte layer comprises a binder and a sulfide solid electrolyte.
